# EUROPÄISCHE PATENTANMELDUNG

(11) **EP 0 606 530 A1**
(43) Veröffentlichungstag der Anmeldung: **20.07.1994**
(21) Anmeldenummer: 93114702.9
(22) Anmeldetag: 28.12.1990
(51) Int. Cl.: B65G 15/08, B65G 23/14

(54) **Schlauchgurtförderer**

(30) Priorität: 29.12.1989 DE 8915255 U
(62) Teilanmeldung aus: 91900800.3
(71) Anmelder: VSR TECHNOLOGIE GmbH, D-45472 Mülheim (DE)
(72) Erfinder: Rappen, Albert, Dipl.-Ing., D-4330 Mülheim a.d.Ruhr (DE)
(74) Vertreter: Schumacher, Horst, Dr. Dipl.-Phys.

(57) **Zusammenfassung**

Ein mit Form- und Führungs-Rollen (2) versehener Schlauchgurtförderer (10) mit einem endlosen Fördergurt (40) in Schlauchform mit einem Ober- und einem Untertrum (41 und 42) sowie Umlenkstationen (43 und 44) an den beiden Enden zwischen Obertrum und Untertrum ist mit einer Zwischenantriebsstation (100) versehen. Diese besteht aus einem angetriebenen Gurt (Zwischenantriebsgurt 21), der an den zumindest teilweise zum Schlauch geformten Fördergurt (40) angedrückt wird.

## Beschreibung

Die Erfindung betrifft einen Schlauchgurtförderer nach dem Oberbegriff des Anspruchs 1.

Bei Schlauchgurtförderern werden die Gurte entweder als ebene Gurte oder in einer Teil- oder Vollkreisform hergestellt, gegebenenfalls in einer Reihe von Formstationen zu einem Schlauch geformt und dann etwa kreisförmig über die Förderstrecke geführt. Es ist vorteilhaft, wenn der Gurt bereits bei der Auslieferung endlos zusammenvulkanisiert wird, da wegen der starken wechselnden Krümmungen an die Verbindungen besonders hohe Anforderungen gestellt werden. Zudem ist das Vulkanisieren auf der Baustelle schwierig und unwirtschaftlich. Der Gurt muß dann als Ganzes in die Gurtförderanlage, insbesondere in die den kreisförmigen Gurtquerschnitt umschließenden Rollenkäfige eingebaut werden. Hierzu sind die z.Zt. verwendeten käfigförmigen Rollenstationen mit den montierten gabelförmigen Halterungen für die Rollen äußerst ungeeignet.

Auch besteht häufig die Notwendigkeit, einen Schlauchförderer auf ungleichmäßigem Niveau zu errichten oder nachträglich aufgrund veränderter Endstationen oder kreuzender Leitungen und Verkehrsstränge die Rollenstationen in der Höhe zu verändern. Es ist schwierig, die genaue Form des Gurtes in den verschiedenen Formstationen für das Ein- und Ausformen sowie beim Öffnen für das Zwischenbeladen auszulegen. Auch für das Führen des Gurtes in Vertikalen, Horizontalen oder Raumkurven ist es notwendig und wünschenswert, eine einfache Anpassung der Rollenlage auf der Baustelle vorzunehmen.

Ein besonderes Problem stellt bei modernen Schlauchförderern der Fördergurtantrieb dar. Vor allem bei langen Förderstrecken ist es unerwünscht, wenn die notwendige Antriebsleistung längsspannungserhöhend durch den gesamten Gurt geleitet werden muß. Das Ziel der Erfindung besteht darin, dieses Antriebsproblem zu lösen. Diese Aufgabe wird durch die Merkmale des Anspruchs 1 gelöst.

Durch die Erfindung wird unter anderem eine flexible Anpassung des Förderschlauches an die unterschiedlichsten Geländesituationen und Förderaufgaben ermöglicht.

Zweckmäßige Ausgestaltungen des Erfindungsgegenstandes, die insbesondere die Systemflexibilität erhöhen und die Verwendung einfachster Bauteile gewährleisten sowie eine ganze Reihe von Sonderanwendungen ermöglichen, sind in weiteren Ansprüchen enthalten.

Die vorgenannten sowie die beanspruchten und in den Ausführungsbeispielen noch zu beschreibenden, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen erfindungsgemäßer Rolleneinrichtungen dargestellt sind. In der Zeichnung zeigen:
- Fig. 1: einen Schlauchgurtförderer mit einem Zwischenantrieb und Umlenkstationen an den beiden Streckenenden zwischen Obertrum und Untertrum in Seitenansicht bzw. in Ansicht von oben;
- Fig. 2: eine alternative Ausführungsform einer Zwischenantriebsstation im Querschnitt durch das zwischenangetriebene Trum sowie
- Fig. 3: eine weitere alternative Ausführungsform einer Zwischenantriebsstation in Gestalt einer Befüll- bzw. Zwischenbefüllstation im Querschnitt durch das zwischenangetriebene Trum.

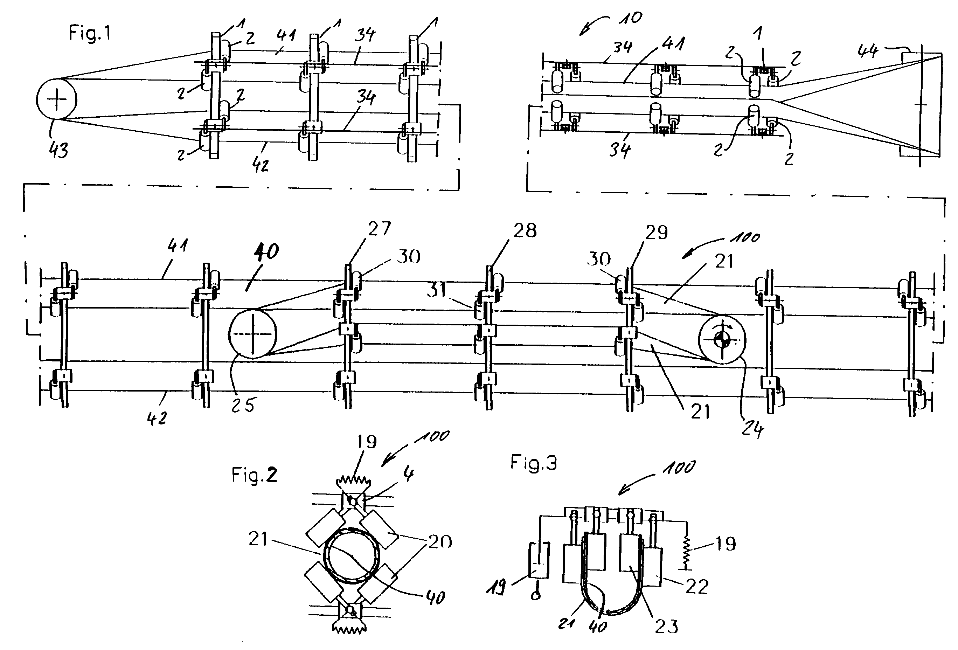

Der insgesamt mit 10 bezeichnete Schlauchgurtförderer besteht aus einem zu einem Schlauch geformten endlosen Fördergurt 40, dessen Obertrum 41 und Untertrum 42 zwischen Umlenkstationen 43 und 44 verläuft. In Fig. 1 ist die (in der Fig. linke) Umlenkstation 43 in Seitenansicht dargestellt, während die (in der Fig. rechte) Umlenkstation 44 in Ansicht von oben dargestellt ist. Wie erkennbar, wird der Fördergurt 40 im Bereich der beiden Umlenkstationen in eine gerade gestreckte Querschnittsform gebracht. Form- und Führungs-Rollen 2, die in bekannter Weise an Rahmen 1 befestigt sind, gestatten das Formhalten und Führen des entlang der Förderstrecke in Schlauchform ausgebildeten bzw. gehaltenen Ober- und Untertrums 41 und 42. Die Rahmen 1 können mit Zugelementen, wie Seilen 34 miteinander verspannt sein.

Wie aus dem mittleren Teil der Fig. 1 ersichtlich, ist eine insgesamt mit 100 bezeichnete Zwischenantriebsstation in der Weise auf der Strecke zwischen den Umlenkstationen 43 und 44 vorgesehen, daß ein durch eine angetriebene Rolle 24 antreibbarer, endlos ausgebildeter Zwischenantriebsgurt 21 an den zum Schlauch geformten Fördergurt 40 angedrückt wird. Dies geschieht in der Weise, daß der Zwischenantriebsgurt 21 mittels Rollen 30, 31 bzw. 20 zwischen den Umlenkrollen 24, 25 in der Weise zum Schlauch geformt wird, daß er den Fördergurt 40 flächig berührt und - im Querschnitt gesehen - umschlingt. Auf der Strecke der Zwischenantriebsstation 100 übernehmen die Rollen 30, 31; 20 damit die Funktion der Form- und Führungsrollen des Fördergurtes 40. Auf diese Weise können sehr einfach erhebliche Reibungskräfte annähernd verschleißfrei auf die äußere Oberfläche des Fördergurtes 40 übertragen werden.

Durch gefederte bzw. angepreßte einander gegenüber stehende Rolle 20; 30, 31 wird ein Zwischenantriebsgurt 21 reibungserhöhend gegen den Schlauchgurt 40 gedrückt (Fig. 1 und 2). Alternativ können äußere Anpeßrollen 22 auch gegen innere Rollen 23 drücken, die von oben, z.B. bei Zwischenaufgaben in das Innere den Schlauch öffnend weisen (Fig. 3). Durch die Federung 19 können die Rollen 20; 22, 23 bei Grobstücken nachgeben, so daß auch enge Schlauchgurtförderer bei Grobstücken verwendet werden können.

Durch die (bevorzugte) Verwendung von mindestens 3 Rahmen 27, 28, 29 mit dem erfindungsgemäßen Rollensystem im Bereich eines Zwischenantriebes (Fig. 1) wird der Gurt 40 durch die Rollen 30 des äußeren ersten oder letzten Rahmens niedergehalten, während die Rollen 31 eines Mittelrahmens (zweiter Rahmen) den Zwischenantriebsgurt 21 und den Fördergurt 40 reibungserhöhend anhebt, so daß die gewünschte Zusatzantriebsleistung zusammen mit weiteren reibungserhöhenden Maßnahmen übertragen werden kann.

Wie die Alternative nach Fig. 3 zeigt, kann der Fördergurt 40 auf der Strecke zwischen den Umlenkstationen 43 und 44 auf einer Teilstrecke etwa zur U-Form geöffnet werden, um die Beladung bzw. Zwischenbeladung des Fördergurtes 40 auf der entsprechenden Teilstrecke zu ermöglichen. In Förderrichtung davor und dahinter ist der Fördergurt 40 wieder zur Schlauchform (wie in Fig. 1) geschlossen. Dieser Bereich der Beladungs- bzw. Zwischenbeladungsstation wird gleichzeitig als Zwischenantriebsstation genutzt. Hierzu ist der Zwischenantriebsgurt 21 der im übrigen wie bei dem Ausführungsbeispiel nach Fig. 1 ausgebildeten Zwischenantriebsstation 100 nicht zur Schlauchform sondern ebenfalls zur U-Form entlang der Zwischenantriebsstrecke (Fig. 3) geformt und liegt flächig an dem Schlauchgurt 40 an, wobei die gegeneinander gepreßten inneren und äußeren Anpreßrollen 22 und 23 den Schlauchgurt 40 und den Zwischenantriebsgurt 21 zusätzlich aneinanderpressen. Es versteht sich, daß eine Zwischenantriebsstation gemäß der Erfindung ergänzend zu den konventionellen Gurtantrieben an den Umlenkstationen oder weiteren Zwischenantriebsstationen entlang der Förderstrecke einsetzbar ist.

## Patentansprüche

1. Mit Form- und Führungs-Rollen versehener Schlauchgurtförderer mit einem endlosen Fördergurt (40) in Schlauchform mit einem Ober- und Untertrum (41 und 42) sowie Umlenkstationen an den beiden Enden zwischen Obertrum und Untertrum,
**dadurch gekennzeichnet**,
daß auf der Strecke zwischen den Umlenkstationen (43, 44) ein angetriebener Gurt (Zwischenantriebsgurt 21) an den zumindest teilweise zum Schlauch geformten Fördergurt (40) angedrückt wird.

2. Schlauchgurtförderer nach Anspruch 1, dadurch gekennzeichnet, daß der Zwischenantriebsgurt (21) durch gefederte oder angepreßte, einander gegenüberstehende Rollen (20; 30, 31) gegen den Schlauchgurt (40) gedrückt werden.

3. Schlauchgurtförderer nach Anspruch 1, dadurch gekennzeichnet, daß der Schlauchgurt (40) geöffnet ist und auf seiner Außen- und seiner Innenfläche angreifende Anpreßrollen (22 und 23) gegeneinander drücken.

4. Schlauchgurtförderer nach Anspruch 3, dadurch gekennzeichnet, daß der Zwischenantrieb als Aufgabestation für Fördergut ausgestaltet ist.

5. Schlauchgurtförderer nach einem der Ansprüche 1 bis 4, dadurch gekennzeichnet, daß der Schlauchgurt (40) im Bereich des Zwischenantriebes (Fig. 1) an den beiden Enden der Zwischenantriebsstrecke durch Rollen (30) niedergehalten und in dem zwischen den Rollen (30) liegenden Mittelbereich durch Rollen (31) angehoben wird.
